# FASCICULE DE BREVET EUROPEEN

(11) **EP 2 542 377 B1**
(45) Date de publication et mention de la délivrance du brevet: **22.01.2014**
(21) Numéro de dépôt: 11712932.0
(22) Date de dépôt: 28.02.2011
(51) Int. Cl.: B23Q 3/06, B25B 5/14

(54) **SUPPORT DE BLOCAGE D'UNE AUBE PAR SA PALE LORS DE L'USINAGE DE SON PIED.**
MONTAGE ZUR BLOCKIERUNG EINER LAUFSCHAUFEL ANHAND IHRES BLATTES WÄHREND DER BERARBEITUNG DES FUSSES DIESER LAUFSCHAUFEL
MOUNTING FOR LOCKING A VANE BY MEANS OF THE BLADE THEREOF DURING MACHINING OF THE ROOT OF SAID VANE

(30) Priorité: 05.03.2010 FR 1051616
(43) Date de publication de la demande: 09.01.2013
(73) Titulaire: SNECMA, 75015 Paris (FR)
(72) Inventeur: DUPOUY, Olivier, F-92300 Levallois (FR); CHACON, José, F-92390 Villeneuve La Garenne (FR); DESMARS, Philippe, F-78250 Meulan (FR); HEYER, Gérard, F-92160 Antony (FR); MENGUY, Jean-Paul, F-95870 Bezons (FR)
(74) Mandataire: Gevers France
(86) Numéro de dépôt international: PCT/FR2011/050402
(87) Numéro de publication internationale: WO 2011/107699

(56) Documents cités:
- EP-A1- 2 002 926
- EP-A1- 2 145 734
- US-A- 5 813 593

## Description

Le domaine de la présente invention est celui de l'aéronautique et, plus particulièrement celui de la fabrication des aubes des turbomachines.

Les aubes des turbomachines sont constituées de deux parties, une supérieure, ou pale, et une partie inférieure, ou pied, les deux étant séparées par une plateforme. La pale est destinée à être positionnée dans la veine gazeuse pour produire une compression des gaz, dans le cas des aubes de compresseur, ou produire du travail par détente des gaz de la veine, dans le cas des aubes de turbine. Un élément essentiel dans la fabrication d'une aube est le respect de l'orientation relative de la pale par rapport au pied car, le pied étant rattaché à un disque et donc fixe par rapport à la turbomachine, cette orientation détermine la position de la pale dans le flux des gaz et par suite son efficacité aérodynamique.

La fabrication d'une aube commence, en général, par la réalisation d'une pièce brute, soit par forgeage dans le cas d'une aube de compresseur, soit par fonderie dans le cas d'une aube de turbine. Cette opération aboutit en général à une pièce aux cotes finies en ce qui concerne la pale et seulement à une ébauche pour le pied, qu'il convient ensuite de tailler pour lui donner la forme finale, en bulbe ou en forme de sapin. La forme donnée au pied lui permet d'être tenue par un alvéole du disque lors de son fonctionnement sur la turbomachine. Il importe au cours de cette opération de taille du pied de ne pas accroître les incertitudes sur le positionnement de la pale par rapport au pied, en évitant d'ajouter des tolérances d'usinage trop importantes aux tolérances déjà existantes, liées à la fabrication de la pale.

L'usinage du pied s'effectue en positionnant l'aube dans un référentiel connu, lié à la machine outil, et matérialisé par six points d'appui formant des butées contre lesquels l'aube doit venir s'appuyer. Un support de blocage adapté est connu du document Ep-A-2 145 734, qui forme le préambule de la revendication 1 annexée. Les points de l'aube en contact aves ces butées sont pour certains matérialisés par un repère sur la surface extérieure de l'aube, qui est généré lors du forgeage ou de la fonderie. L'étape suivante, qui est l'étape essentielle pour réussir le positionnement correct du pied par rapport à la pale, consiste à brider l'aube pour qu'elle ne bouge pas au cours de l'usinage du pied et qu'ainsi les flancs du bulbe ou du sapin du pied soient correctement orientés. Une des difficultés associées à cette opération réside dans la forme tridimensionnelle de la pale qui ne présente pas de surface plane sur laquelle faire porter un appui parfaitement étayé.

Une des techniques couramment employée dans l'art antérieur consiste à enrober la pale, ou tout au moins une partie conséquente de celle-ci, dans un noyau réalisé en un matériau à bas point de fusion. De cette façon la question du positionnement précis de la pale est reportée sur le positionnement du noyau qui présente, par construction, des surfaces planes. Après réalisation de l'usinage du pied, le noyau est éliminé par fusion et l'aube retrouve sa forme extérieure normale. Cette méthode comporte plusieurs inconvénients, comme celui, tout d'abord d'augmenter les incertitudes de positionnement du pied en ajoutant aux tolérances de fabrication de la pale, celles issues du positionnement du noyau autour d'elle ; ensuite il convient de protéger les cavités pratiquées dans la pale, dans le cas particulier des aubes de turbine, pour éviter que du matériau du noyau ne vienne, après sa liquéfaction, obturer les orifices d'accès aux cavités de refroidissement de l'aube ; enfin, malgré les soins apportés dans le choix du matériau pour le noyau, il y a des risques de contamination des surfaces de la pale par ce matériau.

Une autre technique a été imaginée qui consiste à brider mécaniquement la pale, après l'installation de celle-ci et de la plate-forme de l'aube contre les six butées de la tête d'usinage de la machine-outil, en appuyant une pièce de serrage contre elle. Cette technique ne garantit pas une stabilité parfaite car l'appui, qui est généralement pratiqué sur le centre de l'extrados de la pale, est alors limité du fait qu'il ne s'exerce que dans une seule direction. La pression applicable est en outre limitée par la résistance de la pale et par celle du voile constituant l'épaisseur de cet extrados. A défaut d'un appui suffisant la pale peut se déplacer lors de l'usinage ; a contrario un appui trop important se traduirait par un marquage de la surface de l'extrados, associé éventuellement à une déformation du profil de cet extrados dont l'épaisseur est relativement mince.

La présente invention a pour but de remédier à ces inconvénients en proposant un dispositif de maintien de la pale d'une aube de turbomachine sur la tête d'usinage d'une machine-outil, qui ne présente pas au moins certains des inconvénients de l'art antérieur et, en particulier, qui assure un bon maintien de la pale lors de la taille du pied ou de toute autre partie de l'aube, sans risque de dégradation du profil.

A cet effet, l'invention a pour objet un support de blocage d'après la revendication 1 annexée.

On arrive ainsi à correctement usiner un pied d'aube en maintenant celle-ci uniquement par des pressions exercées sur la pale, ce qui libère l'accès au pied.

Avantageusement le premier moyen de bridage comprend au moins trois points d'appui répartis de façon discrète sur ladite surface non plane.

Le choix d'un contact selon des surfaces discrètes donne une meilleure adaptation des points d'appui sur la surface de la pale, malgré les dispersions de fabrication et le choix d'une multiplication des points d'appui permet de réduire la pression appliquée en chaque point de l'aube. Cette caractéristique est importante dans la mesure où les aubes de turbine sont creuses et que leurs surfaces externes sont réalisées sous la forme de voiles relativement fins.

Dans un mode particulier de réalisation le premier moyen de bridage comprend au moins quatre points d'appui répartis de façon discrète sur ladite surface non plane, de sorte que la pression exercée sur ladite surface soit, en tout point, inférieure à 100 bars.

Préférentiellement la résultante des forces s'exerçant sur ladite surface non plane s'exerce à l'intérieur du polygone reliant lesdites butées associées à ladite surface. On obtient ainsi un appui positif sur chacune des butées associées à l'intrados de l'aube.

De façon encore plus préférentielle la résultante des forces s'exerçant sur ladite surface non plane s'exerce sensiblement au niveau du barycentre des butées associées à ladite surface, chacune des butées étant affectée du même coefficient. Chaque butée est alors soumise à la même pression, qui est la valeur minimale nécessaire au maintien de l'aube.

Dans un mode particulier de réalisation le second moyen de bridage comprend au moins deux points d'appui répartis de façon discrète le long dudit un des bords latéraux.

Avantageusement la résultante des forces s'exerçant sur ledit un des bords latéraux s'exerce à l'intérieur du segment reliant les butées associées audit autre bord latéral.

Préférentiellement la résultante des forces s'exerçant sur ledit un des bords latéraux s'exerce sensiblement au niveau du barycentre des butées associées audit autre bord latéral, chacune des butées étant affectée du même coefficient.

Dans un mode particulier de réalisation le second moyen de bridage a la forme d'un palonnier porteur d'excroissances et est entraîné par un moyen unique de serrage.

L'invention porte encore sur un support de blocage tel que décrit ci-dessus équipé d'une pièce maintenue contre son mors fixe par son mors mobile.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue de face, côté intrados, d'une aube de turbine haute pression (HP) d'une turbomachine ;
- la figure 2 est une vue de face, côté extrados, de la même aube de turbine HP d'une turbomachine ;
- la figure 3 est une vue en perspective d'une aube de turbine HP installée dans une tête d'usinage d'une machine-outil et maintenue en place par un dispositif de maintien selon un mode de réalisation de l'invention ;
- la figure 4 est une vue en perspective de la tête d'usinage d'une machine-outil et de son dispositif de maintien selon un mode de réalisation de l'invention ;
- la figure 5 est une vue en perspective d'un premier moyen de maintien d'une aube faisant partie d'un dispositif de maintien selon un mode de réalisation de l'invention ;
- la figure 6 est une vue en perspective dudit premier moyen de maintien, en position contre l'intrados d'une aube de turbine HP ;
- la figure 7 est une vue en perspective d'un second moyen de maintien d'une aube faisant partie d'un dispositif de maintien selon un mode de réalisation de l'invention ;
- la figure 8 est une vue en perspective dudit second moyen de maintien, en position contre le bord de fuite d'une aube de turbine HP;
- la figure 9 est une vue en perspective d'une aube de turbine HP, son extrados étant en appui contre une butée appartenant au référentiel de positionnement de l'aube ;
- la figure 10 est une vue en perspective d'une aube de turbine HP installée dans une tête d'usinage d'une machine-outil et maintenue en place par un dispositif de maintien selon un mode alternatif de réalisation de l'invention.

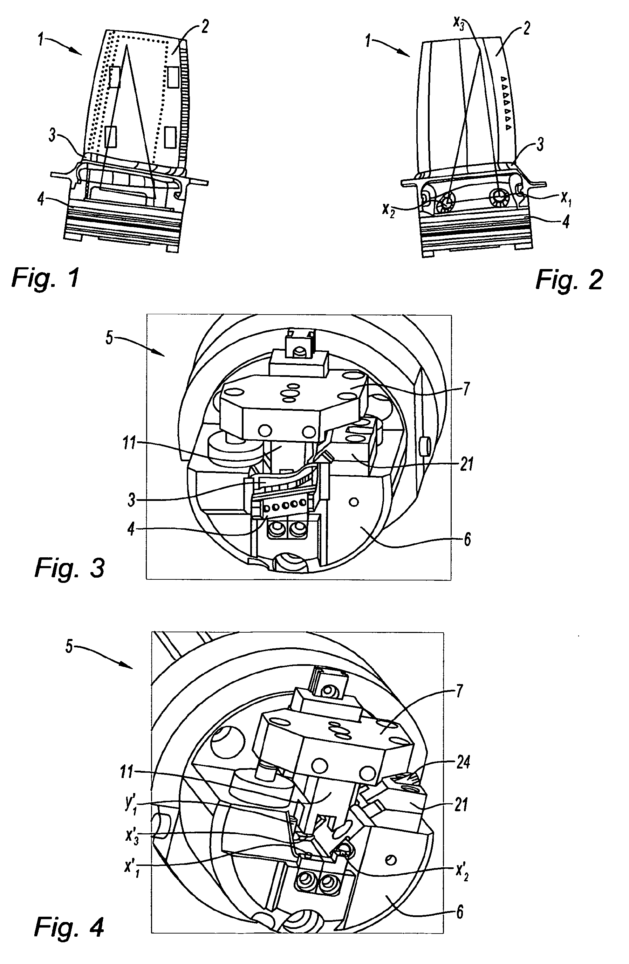

En se référant aux figures 1 et 2, on voit, respectivement, l'intrados et l'extrados d'une aube 1 de turbine HP comprenant une pale 2 se terminant à sa partie inférieure par une plateforme 3 qui délimite un pied d'aube 4. Ledit pied est encore sous une forme d'ébauche et doit être usiné pour lui donner une forme en bulbe ou en sapin. L'aube 1 est référencée spatialement vis-à-vis d'un repère orthonormé x, y, z, la direction x étant orientée perpendiculairement au plan médian de la pale 2, la direction y étant dans ce plan et orientée parallèlement au plan de la plateforme 3 et la direction z étant orientée perpendiculairement à la plateforme 3.

Sur la figure 2 on voit trois points de l'extrados, référencés X1, X2 et X3, qui marquent les points par lesquels l'aube doit s'appuyer contre trois des six points du référentiel de positionnement de l'aube dans la tête d'usinage 5 de la machine-outil. Les trois points correspondants sont les points qui servent d'appui à l'aube contre les points X'1, X'2 et X'3 du référentiel de positionnement formant butées selon la direction x. Le positionnement précis de l'aube 1 sur la tête d'usinage 5 est ainsi assuré par ces trois butées qui la bloquent selon la direction x et qui coopèrent avec les points X1, X2 et X3 de l'extrados, par deux butées de blocage de points Y1 et Y2 selon la direction y qui sont destinés à recevoir le bord d'attaque de l'aube et par une butée de blocage de l'aube 1 selon la direction z au niveau d'un point Z1 positionné sur ou sous la plateforme 3.

En se référant maintenant à la figure 3 on voit une tête d'usinage 5 comportant un mors fixe 6 et un mors mobile 7, destinés à maintenir, par serrage de sa pale, une aube 1 en place pendant l'usinage de son pied. Cette tête 5 est destinée à venir en face d'une meule qui présente sur son arête de coupe le profil, en négatif, que l'on souhaite donner au pied 4. L'aube 1 fait saillie de la tête d'usinage 5 par sa plateforme 3 et son pied 4, alors que la pale 2, non visible sur la figure, est enserrée entre les mors 6 et 7 de la tête 5.

Sur la figure 4 est représentée la même tête d'usinage 5, sans l'aube 1 entre ses mors. On voit les butées X'1, X'2, et X'3 contre lesquels viendront prendre appui les points de référence X, X2 et X3 de l'extrados de l'aube lors de sa mise en place dans la tête d'usinage 5. On voit également une des butées latérales Y'1 contre laquelle vient s'appuyer un point Y1 (non représenté) du bord d'attaque de l'aube 1. Les figures 3 et 4 montrent également deux moyens de bridage 11 et 21 qui servent à maintenir l'aube 1 en contact contre lesdites butées pendant la phase d'usinage du pied 4. Une première bride, verticale, 11 a pour fonction d'appuyer sur l'intrados de l'aube 1 afin d'assurer le maintien de son extrados contre les butées X'1, X'2 et X'3, au niveau des points d'appui X1, X2 et X3. Une seconde bride, latérale, 21 assure, quant à elle, une pression sur le bord de fuite de l'aube 1, orientée en direction du bord d'attaque, de façon que celui-ci reste en contact avec les butées Y'1 et Y'2 au niveau de ses points d'appui Y1 et Y2.

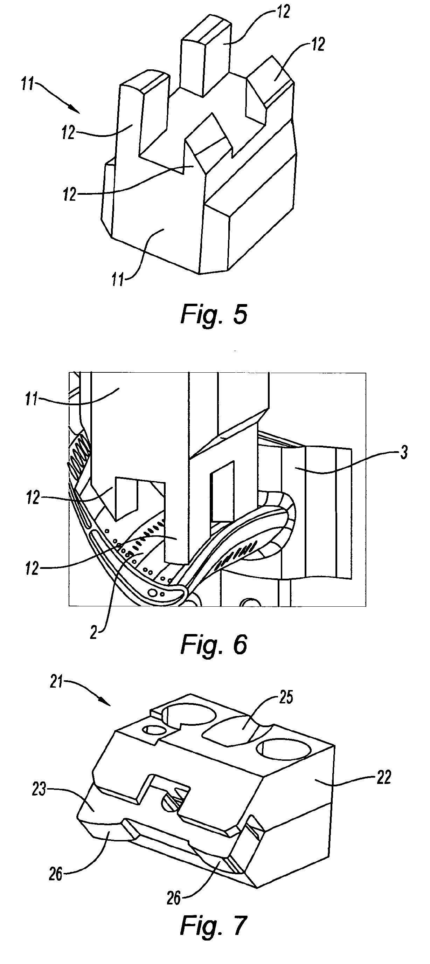

La forme donnée à la bride verticale 11 est détaillée sur les figures 5 et 6. Elle a sensiblement la forme d'un parallélépipède rectangle duquel s'étendent, aux quatre coins d'une de ses faces, quatre tampons 12. Ces tampons sont parallèles entre eux, selon une direction qui correspond à la direction verticale, une fois que la bride verticale 11 est installée sur la tête d'outillage 5. Ils se terminent par des surfaces courbes reproduisant, en négatif, la forme de l'intrados à l'endroit où ils ont pour fonction d'appuyer. Sur la figure 1 est représentée la forme des surfaces de l'intrados de l'aube 1 sur lesquelles ces quatre tampons exercent leur appui.

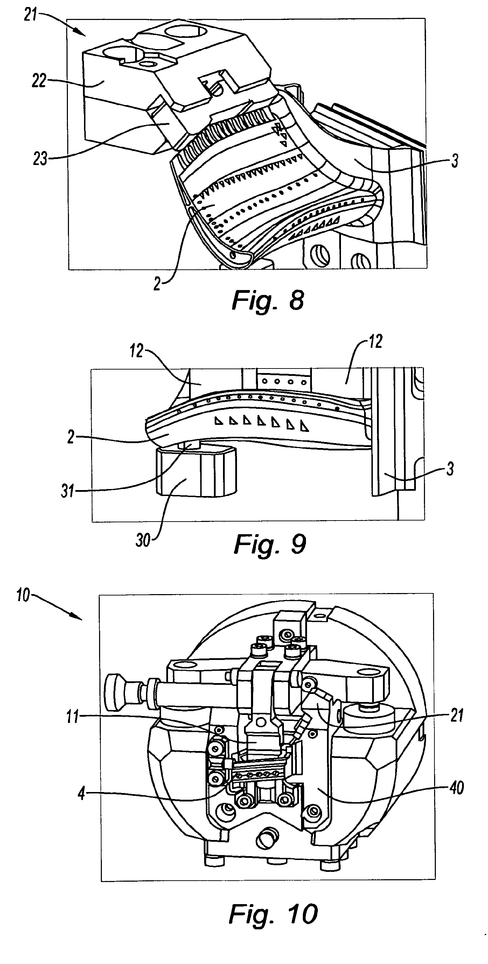

Pareillement les figures 7 et 8 montrent la forme de la bride latérale 21. On voit une bride latérale constituée de deux parties, une partie fixe 22 portée par le mors fixe 6 de la tête d'usinage 5 et une partie mobile 23 en forme de palonnier qui peut se mouvoir en s'éloignant ou se rapprochant de la partie fixe 22 sous l'action d'une vis de serrage 24, visible sur la figure 4. La vis de serrage 24 se déplace dans un logement cylindrique 25, dont l'axe est orienté vers la position qu'aura le bord d'attaque de l'aube 1, une fois que celle-ci aura été installée sur la tête d'outillage 5. Le palonnier 23 comporte deux excroissances convexes 26, qui ont pour fonction de servir d'appui à la bride latérale 21 contre le bord de fuite de l'aube 1. Ces excroissances ont comme surface externe la forme, en négatif, du bord de fuite au niveau de leur point de contact avec ce bord de fuite. Une action sur la vis de serrage 24 imprime une pression sur le bord de fuite de l'aube 1 et assure une mise en contact franc du bord d'attaque de l'aube, au niveau de ses points Y1 et Y2, contre les butées Y'1 et Y'2.

Sur la figure 9 est représenté le positionnement de l'aube 1 selon la direction z. L'aube est poussée vers le bas par la pression exercée sur son intrados par les tampons 12 de la bride verticale 11 et maintenue en position d'une part par les butées X'1 et X'2, non visibles sur la figure, et par la butée X'3 d'extrados. Celle-ci est représentée sous la forme d'une pièce 30, sensiblement cylindrique à génératrices selon la direction z, de laquelle s'étend un tampon inférieur 31 dont la surface externe présente, en négatif, la forme de la surface de l'extrados avec laquelle elle entre en contact.

Enfin, la figure 10 montre un outillage navette 40 porteur des diverses butées X', Y' et Z' et des brides 11 et 21, et dans lequel est insérée une aube 1, de la même manière que précédemment. L'outillage navette 40 est lui-même fixé dans le mors fixe 6 de la tête d'usinage 5 par des techniques connues de l'homme du métier. Les dimensions et le positionnement des butées dans cet outillage navette permettent, en le configurant pour un type d'aube à usiner donnée, d'utiliser les mêmes réglages de la même tête d'usinage pour plusieurs types d'aubes.

Le passage d'une aube d'un certain type à une aube d'un autre type s'effectue en changeant d'outillage navette et en choisissant celui qui est adapté à la nouvelle aube à usiner. Cette variante présente, par ailleurs l'avantage de pouvoir préparer l'aube à usiner avant son installation sur la machine-outil et de ne pas immobiliser celle-ci pendant tout le temps nécessaire au positionnement de l'aube sur les butées de la tête d'usinage. L'exécution de cette tâche, en dehors de la machine-outil facilite en outre grandement le travail de l'opérateur qui dispose de toute la place nécessaire pour l'installation de l'aube 1. Les risques d'erreurs ou d'incertitudes sur le montage sont, de ce fait, fortement réduits.

Sur la figure 10 la partie fixe 22 de la bride latérale 21 est réalisée de façon monobloc avec l'outillage navette 40, pour des raisons de simplification de la réalisation.

On va maintenant décrire le déroulement de l'installation d'une aube de turbine 1 dans une tête d'usinage 5 selon l'invention.

L'opérateur présente l'aube 1 avec son extrados orienté vers le bas pour l'introduire dans la tête d'usinage 5. Il vient la caler, en la déplaçant selon les trois directions dans un ordre à sa convenance, contre les six points du référentiel de positionnement présents sur le mors fixe 6 de cette tête d'usinage : les deux butées Y'1 et Y'2 du bord d'attaque, les butées X'1, X'2 et X'3 sous l'aube et enfin la butée Z'1 en poussant l'aube 1 dans la direction x jusqu'à ce que la plateforme 3 vienne en contact contre cette butée.

L'opération suivante consiste à serrer le mors mobile 7 contre le mors fixe 6, en jouant simultanément sur les deux brides de serrage 11 et 21. L'opérateur fait descendre la bride verticale 11 jusqu'à ce que les tampons 12 viennent en appui sur l'intrados de l'aube 1 et il s'assure que tous les tampons s'adaptent bien contre la surface de l'intrados. Puis il applique, par l'intermédiaire de moyens classiques, une pression suffisante sur la bride 11 pour garantir le maintien de l'aube malgré les sollicitations qui seront engendrées par l'usinage du pied 4. Il fait de même avec la bride latérale 21 en poussant le palonnier 23 par l'intermédiaire de la vis de serrage 24, jusqu'à ce que les excroissances 26 viennent au contact du bord de fuite de l'aube 1. Il applique alors, de même que précédemment, une pression calibrée contre le bord de fuite de l'aube par un vissage complémentaire sur la vis de serrage 24. Le couple de serrage appliqué sur cette vis est celui défini par le calcul, avec pour objectifs, d'une part, que l'aube 1 soit bien tenue et ne bouge pas lors de l'usinage du pied et, d'autre part, que la pression appliquée n'endommage pas le bord de fuite.

Les résultats obtenus ont montré qu'avec une surface d'appui pour les quatre tampons 11 d'au plus 250 mm² il était possible de tenir l'aube 1 avec une pression appliquée inférieure à 100 bars, et pouvant même être de l'ordre de 70 bars, sans que des mouvements de cette aube n'apparaisse lors de l'usinage du pied 4. Les faibles pressions obtenues ont permis de réaliser ce maintien sans marquage excessif de l'intrados de l'aube 1 par les tampons 11. Par ailleurs la présence de deux points d'appui sur le bord de fuite de l'aube 1 garantit une absence de rotation de l'aube dans son plan médian, malgré les sollicitations dues à l'usinage du pied 4 qui sont importantes du fait que la meule d'usinage se déplace dans ce plan, parallèlement à la direction allant du bord de fuite vers le bord d'attaque.

Pour éviter tout pivotement ou tout basculement il est préférable que la résultante des efforts appliqués s'exerce, dans le cas des tampons 11, à l'intérieur du polygone reliant les butées X'1, X'2 et X'3 associées à l'extrados, et dans le cas du palonnier 23, à l'intérieur du segment reliant les butées Y'1 et Y'2 associées au bord d'attaque de l'aube. Il est même préférable, pour égaliser la pression appliquée sur chaque butée que ces résultantes s'exercent, respectivement, au niveau du barycentre des positions des butées considérées.

Enfin il est préférable, compte tenu des tolérances autorisées sur les cotes de fabrication de la pale des aubes 1, de ne pas réaliser les moyens de bridage 11 et 21 sous la forme d'une seule pièce dont la surface reproduirait, en négatif, tout ou partie de la surface de la pale mais plutôt de réaliser le contact par des zones ponctuelles, ou de faible surfaces, qui sont réparties de façon discrète sur la surface de la pale 2. Les brides 11 et 21 sont alors mieux à même de s'adapter aux dispersions observées sur le positionnement effectif de la surface des pales.

L'invention a été décrite avec un support de blocage de l'aube qui laisse libre le pied de ladite aube pour son usinage. Il est bien évident que ce support pour être adapté pour laisser libre et permettre son usinage, n'importe quelle partie de l'aube qui est extérieure à la pale, comme par exemple sa tête ou sa plateforme.

## Revendications

1. Support pour le blocage dans une machine-outil d'une aube de turbomachine (1) comprenant une pale (2) formant première partie délimitée par deux faces s'étendant entre un bord d'attaque et un bord de fuite et au moins une seconde partie adjacente en pied ou en tête à ladite pale, pour l'usinage de ladite seconde partie (4), ledit support comprenant un mors fixe (6), destiné à recevoir ladite aube, sur lequel sont définis au moins six points formant butées et définissant un référentiel de positionnement pour ladite aube sur ledit mors fixe, et un mors mobile (7) destiné à assurer, pendant les opérations d'usinage de ladite seconde partie (4), le maintien de ladite aube (1) contre ledit mors fixe (6) par action d'au moins un moyen de bridage sur sa pale (2), le mors mobile (7) comportant un premier moyen de bridage (11) exerçant une pression sur une des faces de la pale, sensiblement perpendiculairement à ladite face,
**caractérisé en ce que** le mors fixe (6) comporte un second moyen de bridage (21) exerçant une pression sur le bord d'attaque ou le bord de fuite, orientée sensiblement en direction respectivement, dudit bord de fuite ou dudit bord d'attaque de ladite pale (2).

2. Support de blocage selon la revendication 1 dans lequel le premier moyen de bridage (11) comprend au moins trois points d'appui répartis de façon discrète sur une face de ladite pale.

3. Support de blocage selon la revendication 2 dans lequel le premier moyen de bridage (11) comprend au moins quatre points d'appui répartis de façon discrète sur une face de ladite pale, de sorte que la pression exercée sur ladite face soit, en tout point, inférieure à 100 bars.

4. Support de blocage selon l'une des revendications 2 ou 3 dans lequel la résultante des forces s'exerçant sur ladite face s'exerce à l'intérieur du polygone reliant lesdites butées associées à ladite face.

5. Support de blocage selon la revendication 4 dans lequel la résultante des forces s'exerçant sur ladite face s'exerce sensiblement au niveau du barycentre des butées associées à ladite face, chacune des butées étant affectée du même coefficient.

6. Support de blocage selon l'une des revendications 1 à 5 dans lequel le second moyen de bridage (21) comprend au moins deux points d'appui répartis de façon discrète le long dudit bord d'attaque ou dudit bord de fuite.

7. Support de blocage selon la revendication 6 dans lequel la résultante des forces s'exerçant sur ledit bord d'attaque ou bord de fuite s'exerce à l'intérieur du segment reliant les butées associées, respectivement, audit bord de fuite ou bord d'attaque.

8. Support de blocage selon la revendication 7 dans lequel la résultante des forces s'exerçant sur ledit d'attaque ou bord de fuite s'exerce sensiblement au niveau du barycentre des butées associées respectivement audit bord de fuite ou bord d'attaque, chacune des butées étant affectée du même coefficient.

9. Support de blocage selon l'une des revendications 6 à 8 dans lequel le second moyen de bridage a la forme d'un palonnier (23) porteur d'excroissances (26) et est entraîné par un moyen unique de serrage (24).

10. Support de blocage selon l'une des revendications précédentes équipée d'une pièce (1) maintenue contre son mors fixe (6) par son mors mobile (7).

## Patentansprüche

1. Halterung zum Feststellen, und zwar in einer Werkzeugmaschine, einer Turbotriebwerksschaufel (1), die ein Blatt (2) aufweist, das einen ersten Teil bildet, der von zwei Seiten begrenzt ist, die sich zwischen einer Vorderkante und einer Hinterkante erstrecken, und mindestens einen zweiten Teil bildet, der am Fuß oder Kopf an das Blatt angrenzt, zur maschinellen Bearbeitung des zweiten Teils (4), wobei die Halterung eine zur Aufnahme der Schaufel bestimmte, feststehende Spannbacke (6) aufweist, an der mindestens sechs Punkte definiert sind, die Anschläge bilden und einen Positionierungsbezug für die Schaufel an der feststehenden Spannbacke definieren, und eine bewegliche Spannbacke (7) aufweist, die dazu bestimmt ist, während der Bearbeitungsvorgänge des zweiten Teils (4) den Halt der Schaufel (1) an der feststehenden Spannbacke (6) durch die Wirkung mindestens einer Einrichtung zum Anflanschen an ihrem Blatt (2) sicherzustellen, wobei die bewegliche Spannbacke (7) eine erste Anflanscheinrichtung (11) aufweist, die einen Druck auf eine der Seiten des Blatts im Wesentlichen senkrecht zu der Seite ausübt,
**dadurch gekennzeichnet, dass** die feststehende Spannbacke (6) eine zweite Anflanscheinrichtung (21) aufweist, die einen Druck auf die Vorderkante oder die Hinterkante ausübt, der im Wesentlichen in Richtung der Hinterkante bzw. der Vorderkante des Blatts (2) gerichtet ist.

2. Feststellhalterung nach Anspruch 1, wobei die erste Anflanscheinrichtung (11) mindestens drei Anlagepunkte umfasst, die einzeln auf einer Seite des Blatts verteilt sind.

3. Feststellhalterung nach Anspruch 2, wobei die erste Anflanscheinrichtung (11) mindestens vier Anlagepunkte umfasst, die einzeln auf einer Seite des Blatts so verteilt sind, dass der auf die Seite ausgeübte Druck an jedem Punkt unter 100 bar beträgt.

4. Feststellhalterung nach einem der Ansprüche 2 oder 3, wobei die Resultierende der auf die Seite wirkenden Kräfte im Inneren des Polygons wirkt, das die der Fläche zugeordneten Anschläge verbindet.

5. Feststellhalterung nach Anspruch 4, wobei die Resultierende der auf die Seite wirkenden Kräfte im Wesentlichen im Bereich des gemeinsamen Schwerpunkts der Anschläge wirkt, die der Seite zugeordnet sind, wobei jeder der Anschläge vom selben Koeffizienten betroffen ist.

6. Feststellhalterung nach einem der Ansprüche 1 bis 5, wobei die zweite Anflanscheinrichtung (21) mindestens zwei Anlagepunkte aufweist, die einzeln entlang der Vorderkante oder der Hinterkante verteilt sind.

7. Feststellhalterung nach Anspruch 6, wobei die Resultierende der sich auf die Vorder- oder Hinterkante auswirkenden Kräfte im Inneren des Segments wirkt, das die Anschläge verbindet, die jeweils der Hinter- oder Vorderkante zugeordnet sind.

8. Feststellhalterung nach Anspruch 7, wobei die Resultierende der auf die Vorder- oder Hinterkante wirkenden Kräfte im Wesentlichen im Bereich des gemeinsamen Schwerpunkts der Anschläge wirkt, die jeweils der Hinter- oder Vorderkante zugeordnet sind, wobei jeder der Anschläge vom selben Koeffizienten betroffen ist.

9. Feststellhalterung nach einem der Ansprüche 6 bis 8, wobei die zweite Anflanschvorrichtung die Form eines Ausbuchtungen (26) tragenden Schwinghebels (23) hat und von einer einzigen Klemmeinrichtung (24) angetrieben ist.

10. Feststellhalterung nach einem der vorhergehenden Ansprüche, die mit einem Teil (1) ausgestattet ist, das durch seine bewegliche Spannbacke (7) an seiner feststehenden Spannbacke (6) gehalten ist.

## Claims

1. A mounting for locking in a machine tool a vane of a turbine engine (1) comprising a blade (2) forming first part delimited by two surfaces extending between a leading edge and a trailing edge and at least one second part adjacent in root or in head to the said blade, for machining of the said second part (4), the said mounting comprising a stationary jaw (6), which is intended to receive the said vane and has, defined thereon, at least six points forming stops and defining a positioning reference system for the said vane on the said stationary jaw, and a movable jaw (7) intended to ensure, during machining of the said second part (4), retention of the said vane (1) against the said stationary jaw (6) by the action of at least one means for performing clamping on the blade (2), the movable jaw (7) having a first clamping means (11) exerting a pressure on one surface of the blade substantially perpendicular to the said surface,
**characterized in that** the stationary jaw (6) has a second clamping means (21) exerting a pressure on the leading edge or the trailing edge, oriented substantially in the direction, respectively, of said trailing edge or said leading edge of said blade (2).

2. The locking mounting as claimed in claim 1, wherein the first clamping means (11) comprises at least three bearing points distributed discretely on one surface of said blade.

3. The locking mounting as claimed in claim 2, wherein the first clamping means (11) comprises at least four bearing points distributed discretely over one surface of said blade so that the pressure exerted on the said surface is, at all points, less then 100 bar.

4. The locking mounting as claimed in claim 2 or 3, wherein the resultant of the forces acting on the said non-planar surface acts inside the polygon linking together the stops associated with the said surface.

5. The locking mounting as claimed in claim 4, wherein the resultant of the forces acting on the said non-planar surface acts substantially in the region of the center of gravity of the stops associated with the said surface, each of the stops being acted on by the same coefficient.

6. The locking mounting as claimed in one of claims 1 to 5, wherein the second clamping means (21) comprises at least two bearing points distributed discretely along said leading edge or said trailing edge.

7. The locking mounting as claimed in claim 6, wherein the resultant of the forces acting on said leading edge or trailing edge acts inside the segment linking together the stops associated respectively with said trailing edge or leading edge.

8. The locking mounting as claimed in claim 7, wherein the resultant of the forces acting on said leading edge or trailing edge acts substantially in the region of the center of gravity of the stops associated respectively with said trailing edge or leading edge, each of the stops being acted on by the same coefficient.

9. The locking mounting as claimed in one of claims 6 to 8, wherein the second clamping means has the form of a base block (23) with protrusions (26) and is actuated by a single clamping means (24).

10. The locking mounting as claimed in one of the preceding claims, equipped with a workpiece (1) retained against its stationary jaw (6) by its movable jaw (7).
